# EUROPEAN PATENT APPLICATION

(11) **EP 4 761 146 A1**
(43) Date of publication of application: **17.06.2026**
(21) Application number: 24219432.2
(22) Date of filing: 12.12.2024
(51) Int. Cl.: H04B 10/80

(54) **METHOD FOR OPTICALLY SUPPLYING ELECTRICAL POWER TO AN OPTICAL PROTECTION ELEMENT, OPTICAL DISTRIBUTION NETWORK, OPTICAL LINE TERMINAL AND OPTICAL PROTECTION ELEMENT**

(71) Applicant: Deutsche Telekom AG, 53113 Bonn (DE)
(72) Inventor: HAAG, Thomas, 63110 Rodgau (DE); WEIERSHAUSEN, Werner, 64859 Eppertshausen (DE)
(74) Representative: Schwöbel, Thilo K.

(57) **Abstract**

The invention relates to a method for optically supplying electrical power to an optical protection element being part of an optical distribution network as part of a telecommunications network, wherein the optical distribution network comprises an optical line terminal and, in downstream direction from the optical line terminal, a plurality of optical network terminals, wherein the electrical power supply of the optical protection element is based on the optical line terminal providing a power optical signal in downstream direction towards the optical protection element,
wherein, in order to optically supply electrical power to the optical protection element, the method comprises the following steps:
-- in a first step, the power optical signal is fed, by the optical line terminal, into the optical distribution network,
-- in a second step, a power extraction and conversion element of the optical protection element extracts the power optical signal and converts the power optical signal to an electrical supply current.

## Description

### BACKGROUND

The present invention relates a method for optically supplying electrical power to an element of an optical distribution network as part of a telecommunications network, wherein the optical distribution network comprises an optical line terminal and, in downstream direction from the optical line terminal, a plurality of optical network terminals.

Furthermore, the present invention relates to an optical distribution network as part of a telecommunications network for optically supplying electrical power to at least one element that is part of the optical distribution network, wherein the optical distribution network comprises an optical line terminal and, in downstream direction from the optical line terminal, a plurality of optical network terminals.

Additionally, the present invention relates to an optical line terminal as part of an optical distribution network according to the present invention, wherein the optical line terminal is configured to provide a power optical signal, via the optical distribution network, in downstream direction towards an element.

Additionally, the present invention relates to an optical protection element as part of an optical distribution network according to the present invention.

The exchange of information in broadband communication systems or telecommunications networks, both in fixed-line and wireless communication systems (or fixed-line communication networks and mobile communication networks) has already grown dramatically and probably will also grow in the future due to the rapid spread of different data services in such communication networks.

In conventionally known or current telecommunications networks, typically having or comprising broadband access networks and/or aggregation networks, it is possible to connect many end-users or subscribers by means of using optical distribution networks in order to provide communication services and/or IP connectivity.

Typically in such broadband access networks, end-users or subscribers operate customer premises equipments or home gateway devices in order to establish a (mostly wireline) connection to access nodes of the broadband access network, typically as part of or located at a central office point of delivery. In case of optical distribution networks being used to connect end-users or subscribers to the broadband access network, such customer premises equipments or home gateway devices are typically realized as (or such customer premises equipments or home gateway devices typically comprise or are associated with) optical network terminals (ONT). Such optical network terminals typically terminate the optical distribution network from (or at) the subscriber or end-user side (hereinafter also called downlink side). Especially, such optical distribution networks, especially in case of passive optical networks (PON), typically comprise (at an uplink side thereof) an optical line terminal (OLT) that is serving the optical distribution network and all end-users or subscribers that are connected via the considered optical distribution network in a manner such that downlink traffic is able to be transported in downlink direction (from the optical line terminal towards one or a plurality of end-users or subscribers, i.e. optical network terminals) using the optical distribution network.

In addition to the downlink traffic, also the uplink traffic (i.e. in uplink direction - from an optical network terminal, respectively, towards the optical line terminal) is transported by such an optical distribution network, requiring the respective optical network terminal of (or related to) a considered end-user or subscriber to inject optical signals into the optical distribution network in uplink direction which leads to a potential security risk or disturbance risk of the optical distribution network (or its components) being damaged and/or disturbed by inappropriate input signals fed into the optical distribution network (in uplink direction) by an optical network terminal, especially in case that the network provider or network operator is not able (or not allowed) to control (or to prescribe) which optical network terminal (or which type thereof) is able to be used by the respective end-users or subscribers. Inappropriate input signals comprise optical signals having an optical input power exceeding a threshold value and/or optical signals outside of a predefined optical spectral range.

In order to be able to avoid such damage and/or disturbance related to inappropriate input signals, one or a plurality of optical protection elements might be considered to be part of the optical distribution network, such an optical protection element being configured to be switched between at least a first and a second mode of operation, the first mode of operation being a transmission mode of operation allowing the transmission of optical signals for which the optical distribution network is operatively used, and the second mode of operation being an optical protection mode of operation in which an optical signal - especially an optical signal from the downlink side of the optical protection element - is at least attenuated, if it is not completely blocked, by the optical protection element (especially by a variable optical protector as part thereof).

However, in order to switch such optical protection elements between their at least two modes of operation, at least a minimal amount of energy is required. In case of the optical distribution network being realized as a passive optical network (PON), between the optical line terminal (on the uplink side of the optical distribution network) and the optical network terminal (on the downlink side of the optical distribution network), there is typically no power supply available that might be easily and reliably provided (and/or equipped or retrofitted for already existing optical distribution network infrastructure); this is, typically, at least the general case, e.g. in case of passive optical distribution networks that provide an underground connection between a site of the optical line terminal (where a power supply is typically available) and, normally, a plurality of sites of optical network terminals (likewise typically featuring a power supply), which underground connection is, typically and after its installation, not (or at least not everywhere, e.g. perhaps just at specific locations of manholes) accessible after installation of the optical distribution network.

### SUMMARY

An object of the present invention is to provide a technically simple, effective and cost effective solution for optically and efficiently supplying electrical power to an optical protection element being part of an optical distribution network as part of a telecommunications network. A further object of the present invention is to provide a corresponding optical distribution network for optically supplying electrical power to at least one optical protection element that is part of the optical distribution network, as well as an optical line terminal as part of the optical distribution network, and an optical protection element as part of the optical distribution network.

The object of the present invention is achieved by a method for optically supplying electrical power to an optical protection element being part of an optical distribution network as part of a telecommunications network, wherein the optical distribution network comprises an optical line terminal and, in downstream direction from the optical line terminal, a plurality of optical network terminals, wherein the electrical power supply of the optical protection element is based on the optical line terminal providing a power optical signal in downstream direction towards the optical protection element, wherein, in order to optically supply electrical power to the optical protection element, the method comprises the following steps:
-- in a first step, the power optical signal is fed, by the optical line terminal, into the optical distribution network,
-- in a second step, a power extraction and conversion element of the optical protection element extracts the power optical signal and converts the power optical signal to an electrical supply current.

It is thereby advantageously possible according to the present invention to provide for a protection of an optical distribution network by means of using, as part of the optical distribution network, optical protection elements that are actively switchable (and, hence, requiring to be electrically powered), and nevertheless to be able to supply such electrical power without requiring to install power sources along the optical fiber used for providing the data transmission of the optical distribution network.

Especially, it is advantageously possible according to the present invention to combine the possibility to optically supply electrical power to components, especially optical protection elements, of the optical distribution network, and - by means of using the optical protection elements - to prevent damage and/or disturbance in the optical distribution network and/or its components that results from inappropriate input signals being fed into the optical distribution network (either by an attacker consciously aiming to attack the optical distribution network infrastructure, or a presumed attacker erroneously feeding in an incorrect optical signal).

According to the present invention, a method is provided for optically supplying electrical power to an optical protection element being part of an optical distribution network that is, in turn, part of a telecommunications network.

Especially, the optical distribution network corresponds - basically and in principle - to an optical network that is commonly known, e.g. a passive optical network (PON), for example XGS-PON (10 Gigabit symmetrical passive optical network). In these passive optical networks, the relation between the optical network terminal and the optical line terminal is essential.
For example, it is conceivable according to the present invention (but not necessarily the case, i.e. not mandatory), that - within a passive optical network tree, or optical distribution network - sharing of the transmission capacity of the optical transmission fiber (i.e. used as a shared medium) works, especially in downlink direction, on a frame-based level; i.e. a transmission channel is defined, e.g., by means of an identifier information of the optical network terminal (ONT ID). In such a situation, due to the passive nature of the splitter-based PON tree infrastructure of the optical distribution network, at all end points of the optical distribution network (or PON tree), that means at all optical network terminals, the same signal is terminated and all channels are available. Then, a dedicated (considered) optical network terminal (controlled by the optical line terminal) only selects the relevant channel (or channels) even that all channels are available or present.
In addition, also the uplink traffic (i.e. in uplink direction - from an optical network terminal, respectively, towards the optical line terminal) is transported by such an optical distribution network, and especially (but not necessarily) the same optical fiber (as the one used for downlink traffic) is also used for the uplink traffic; this requires the respective optical network terminal of (or related to) a considered end-user or subscriber to inject optical signals into the (especially single operatively used optical fiber of the) optical distribution network in uplink direction.
Hence, in case that the possibility is required that arbitrary hardware of optical network terminals should be able to be used (and, thus, the network provider or network operator is not able or not allowed to control which optical network terminal (or which type thereof) is used with the optical distribution network, there is the risk that inappropriate input signals might damage and/or disturb the optical distribution network and/or its components, especially the splitter entity or entities and/or the optical line terminal.
In conventionally known passive optical networks or optical distribution networks, such damage and/or disturbance can only be detected at passive optical network tree level (i.e. by the optical line terminal), and, especially, not per optical network terminal device.

Inappropriate input signals might comprise optical signals that have an optical input power that is exceeding a certain - typically at least roughly predetermined - threshold value and/or optical signals that are outside of a predefined (or allowed) optical spectral range.

According to the present invention, the optical distribution network comprises an optical line terminal and, in downstream direction from the optical line terminal, a plurality of optical network terminals.

Additionally according to the present invention, the electrical power supply of the optical protection element is based on the optical line terminal providing a power optical signal in downstream direction towards the optical protection element, and the method comprises the following steps:
-- in a first step, the power optical signal is fed, by the optical line terminal, into the optical distribution network,
-- in a second step, a power extraction and conversion element of the optical protection element extracts the power optical signal and converts the power optical signal to an electrical supply current.

Especially according to the present invention, the optical distribution network comprises at least one splitter entity, and the optical protection element - being positioned between the optical line terminal and at least one of the optical network terminals - might either be positioned on the uplink (facing) side of the specific splitter entity (or the splitter functionality thereof), or, alternatively, on the downlink (facing) side of the specific splitter entity (or the splitter functionality thereof).
Furthermore especially according to the present invention, the optical protection element is configured to protect the optical distribution network, at least in part, from inappropriate input signals (being fed into the optical distribution network at one or a plurality of the optical network terminals).
Especially, this protection is realized by means of the optical protection element comprising an optical power detector and a variable optical protector. The optical power detector is typically realized as a comparatively large band power detector, thus able to detect an overall input power that exceeds a total input power above a threshold value and regarding a comparatively large spectral range; however, alternatively or cumulatively, the optical power detector might also be realized as (or comprise) one comparatively small band power detector or a plurality of such small band power detectors, especially each covering a different spectral range.
Furthermore according to the present invention, the variable optical protector (and, hence, the respective optical protection element) is configured to be switched between at least a first and a second mode of operation. The first mode of operation is a transmission mode of operation allowing the transmission of optical signals - at least the ones for which the optical distribution network is operatively used, but, according to an additional preferred embodiment, also for additional spectral ranges (especially adjacent to the operatively used spectral range, or distinct (or separated) thereof). The second mode of operation is an optical protection mode of operation, i.e. the second mode of operation of the variable optical protector acts such that at least a part of the spectral range for which it is transmissive in its first mode of operation, is either more or less completely blocked or, at least, attenuated such that the optical distribution network is protected and especially damage of optical elements in the uplink path or direction of the respective optical network terminal or splitter entity is avoided.

The optical protection element advantageously provides the possibility - in case of an attack or a presumed attack - to quickly react, i.e. protect the optical distribution network and/or its components or parts by means of switching the variable optical protector to its second mode of operation upon the optical power detector detecting an input signal being detected as inappropriate. This advantageously means that, in order to protect the optical distribution network, at least partly (and, especially, precisely where the (presumed) attack occurs), there is no need for the optical line terminal to necessarily interfere, or to control the protection of the optical distribution network (and, possibly, thereby allowing the damage (and/or disturbance) to be increased as the inappropriate input signal would need to be received by the optical line terminal). Especially according to the present invention, a solution is provided to steer optical protection elements (comprising variable optical protectors), especially on different layers of the optical distribution network (i.e. realizing cascaded filters), in order to prevent attacks, e.g. by injection - upstream, i.e. in uplink direction - of optical spectrum (optical power transients e.g. by lasers) towards the optical line terminal or access facing ports. Such attacks may disturb the concerned optical distribution network or passive optical network tree or might even destroy interfaces.

Additionally according to the present invention, it is advantageously possible to provide the required electrical power to the optical protection elements of the optical distribution network. Especially according to the present invention, a solution is realized to provide the electrical power possibly individually to certain optical protection elements, and especially in a manner tailored to the respective optical protection element.

Furthermore, it is advantageously possible and preferred according to the present invention that an optical fiber is used, as part of the optical distribution network, to transmit communication signals
-- in downstream direction from the optical line terminal towards other elements of the optical distribution network, as well as
-- in upstream direction towards the optical line terminal,

wherein the optical fiber is also used to transmit the power optical signal,
wherein especially the power optical signal is spectrally essentially disjoint from the communication signals.

It is thereby advantageously possible that the same optical fiber is used for both transmitting communication signals and the power optical signal.

Furthermore, it is advantageously possible and preferred according to the present invention that the power optical signal is adapted to the location, within the optical distribution network, of the optical protection element, especially the power of the power optical signal corresponding to a damping factor, or accumulated damping factor, of the location of the optical protection element especially due to its distance from the optical line terminal,
wherein especially the power extraction and conversion element is configured such as to correspond to the power optical signal, especially regarding the spectral location and/or spectral extension of the power optical signal,
wherein especially the power extraction and conversion element corresponds to a frequency selective filter.

Thereby, it is advantageously possible to easily and effectively implement the inventive method: The power optical signal is - as it is able to be individual for a specific optical protection element - able to be adapted to the location, within the optical distribution network, of the considered optical protection element. Furthermore - alternatively or cumulatively, the power extraction and conversion element is able to be configured such as to correspond to the power optical signal; in other words, the power optical signal (especially its spectral location and/or spectral extension) is able to be adapted to the configuration of the power extraction and conversion element.

Furthermore, it is advantageously possible and preferred according to the present invention that the optical protection element comprises at least one photodiode to convert the power optical signal to the electrical supply current,
wherein especially, the optical protection element comprises an energy storage means, especially an accumulator, a capacitor, a supercapacitor.

It is thereby advantageously possible to easily and efficiently convert the power optical signal into an electrical power supply, especially using the energy storage means such as to be able to use the electrical power supply of the energy storage means even though (instantaneously) no power optical signal is temporarily able to be provided.

Furthermore, it is advantageously possible and preferred according to the present invention that, for optically supplying electrical power to a further optical protection element that is likewise part of the optical distribution network, the method furthermore comprises the steps of:
-- a further power optical signal is fed, by the optical line terminal, into the optical distribution network,
-- a further power extraction and conversion element of the further optical protection element extracts the further power optical signal and converts the further power optical signal to an electrical supply current, wherein especially the further power optical signal is adapted to the location, within the optical distribution network, of the further optical protection element, especially the power of the further power optical signal corresponding to a damping factor, or accumulated damping factor, of the location of the further optical protection element, especially due to its distance from the optical line terminal,
wherein especially the further power extraction and conversion element is configured such as to correspond to the further power optical signal, especially regarding the spectral extension of the further power optical signal.

It is thereby advantageously possible to individually adapt the power supply by using the power optical signal to each optical protection element separately.

Furthermore, it is advantageously possible and preferred according to the present invention that the power optical signal has a center wavelength and a spectral width, wherein the further power optical signal has a further center wavelength and a further spectral width, and wherein the center wavelength and the further center wavelength differ by at least one of the spectral width and the further spectral width, especially by at least one time the spectral width, or by the sum of the halves of both neighboring spectral widths in case the spectral widths of the power optical signal and the further power optical signal are different.

It is thereby advantageously possible to separate the provision of optically provided power to the optical protection element.

Furthermore, the present invention relates to an optical distribution network as part of a telecommunications network for optically supplying electrical power to at least one optical protection element that is part of the optical distribution network, wherein the optical distribution network comprises an optical line terminal and, in downstream direction from the optical line terminal, a plurality of optical network terminals, wherein the electrical power supply of the at least one optical protection element is based on the optical line terminal providing at least one power optical signal in downstream direction towards the optical protection element, wherein, in order to optically supply electrical power to the optical protection element, the optical distribution network is configured such that:
-- the at least one power optical signal is fed, by the optical line terminal, into the optical distribution network,
-- a power extraction and conversion element of the at least one optical protection element extracts the at least one power optical signal and converts the at least one power optical signal to an electrical supply current.

Furthermore, it is preferred, especially with respect to the optical distribution network, that for optically supplying electrical power to a further optical protection element that is likewise part of the optical distribution network, the optical distribution network is configured such that:
-- a further power optical signal is fed, by the optical line terminal, into the optical distribution network,
-- a further power extraction and conversion element of the further optical protection element extracts the further power optical signal and converts the further power optical signal to an electrical supply current.

Furthermore, it is preferred, especially with respect to the optical distribution network, that both the power optical signal and the further power optical signal is adapted to the location, within the optical distribution network, of the optical protection element and the further optical protection element, wherein especially the power extraction and conversion element and the further power extraction and conversion element is configured such as to correspond to the power optical signal and the further power optical signal, respectively, especially regarding the spectral extension of the power optical signals.

Furthermore, the present invention relates to an optical line terminal as part of an optical distribution network according to the present invention, wherein the optical line terminal is configured to provide a power optical signal, via the optical distribution network, in downstream direction towards the optical protection element,
wherein especially, the optical line terminal is configured to provide a further power optical signal, via the optical distribution network, in downstream direction towards a further optical protection element,
wherein especially both the power optical signal and the further power optical signal is adapted to the location, within the optical distribution network, of the optical protection element and the further optical protection element.

Furthermore, the present invention relates to an optical protection element as part of an optical distribution network according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

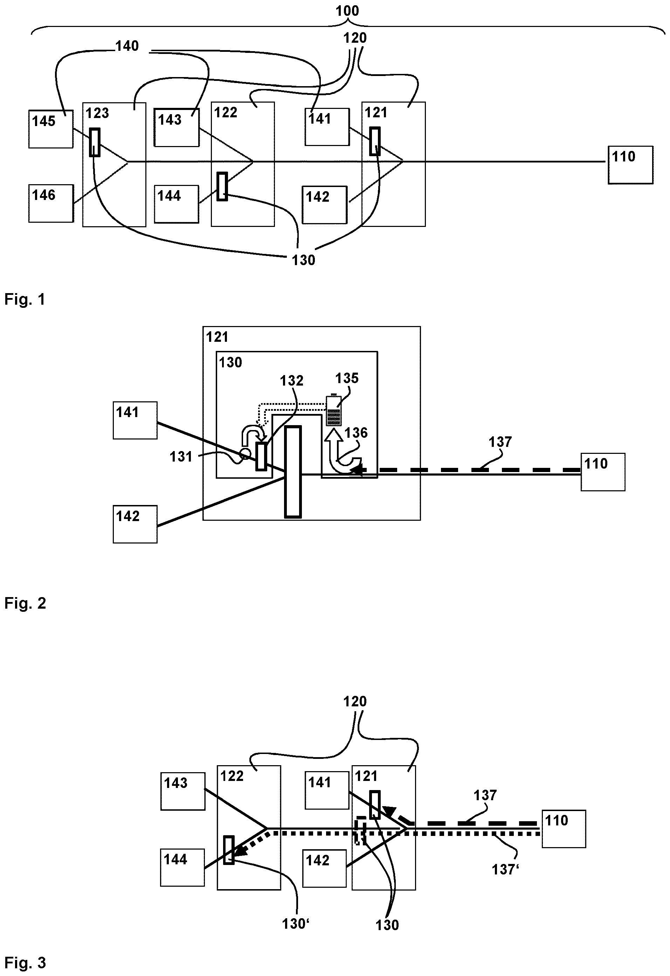

Figure 1 schematically shows exemplarily an optical distribution network according to the present invention for being operated as part of a telecommunications network, the optical distribution network comprising an optical line terminal, a plurality of optical network terminals as well as at least one optical protection element.
Figure 2 schematically and specifically shows - in greater detail - a part of the optical distribution network comprising an optical protection element; the part of the optical distribution network is connected to a plurality of optical network terminals and is represented as comprising the optical protection element (at least regarding the connection to one of the connected optical network terminals), wherein the optical protection element comprises a power extraction and conversion element.
Figure 3 schematically shows in greater detail a part of the optical distribution network, preferably being a passive optical network tree, wherein the part of the optical distribution network shown comprises, besides the optical protection element, a further optical protection element, wherein for optically supplying electrical power to the optical protection elements different power optical signals are fed, by the optical line terminal, into the optical distribution network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

In Figure 1, an optical distribution network 100 is represented for being operated as part of a telecommunications network (not specifically represented and designated by means of a reference sign). According to the present invention, the optical distribution network 100 - especially a passive optical network (PON) - comprises an optical line terminal 110, a plurality of optical network terminals as well as at least one optical protection element. Preferably according to the present invention, the optical distribution network 100 comprises at least one optical splitter entity, and Figure 1 exemplarily shows a first splitter entity 121, a second splitter entity 122 and a third splitter entity 123. Furthermore, Figure 1, likewise exemplarily, shows a first, second, third, fourth, fifth and sixth optical network terminal 141, 142, 143, 144, 145, 146, which are, collectively, designated by means of reference sign 140 and referred to as a plurality of optical network terminals 140. Additionally, a plurality of optical protection elements - designated, in Figure 1, by means of reference sign 130 - are also shown as being part of the optical distribution network 100. Especially, the optical protection elements 130 are schematically shown, in Figure 1, as being as part of respective splitter entities 121, 122, 123.

As is visible from Figure 1, the optical distribution network 100 provides a connection between the optical line terminal 110 and the first splitter entity 121 (hereinafter also, exemplarily, referred to as a/the specific splitter entity 121) as well as a connection between the specific splitter entity 121 and both of the first optical network terminal 141 and the second optical network terminal 142.
However, Figure 1 only shows an example of an optical distribution network 100 according to the present invention; other topologies thereof (compared to the one represented in Figure 1) are also possible according to the present invention.

Especially in case that the network provider or network operator of the telecommunications network, and especially of the optical distribution network 100, is not able (or not allowed) to control which kind of optical network terminal (or which type thereof) an end-user or a subscriber uses, the optical distribution network 100 and its components, especially the splitter entities 121, 122, 123 and/or the optical line terminal 110, is or are at risk of being damaged or disturbed by inappropriate input signals fed into the optical distribution network 100 (in uplink direction) by one of the plurality of optical network terminals 140.

According to the present invention and by means of providing at least one optical protection element 130 (but, preferably, providing a plurality of optical protection elements) - the at least one optical protection element 130 being positioned between the optical line terminal 110 and at least one of the optical network terminals 141, 142 -, it is advantageously possible to prevent damages and/or disturbances that result from such inappropriate input signals being fed into the optical distribution network 100. Especially, it is furthermore advantageously possible according to the present invention that this protection (or prevention of damage and/or disturbance) is possible without generating too much of collateral damage, i.e. damage or inconvenience to other customers or end-users that also use the considered optical distribution network 100, e.g. caused by shutting down the optical distribution network 100 entirely, or at least parts thereof that are much larger than necessarily required.

However, in order to switch the at least one optical protection element 130 between its at least two modes of operation, at least a minimal amount of energy is required. In case of the optical distribution network 100 being realized as a passive optical network (PON), between the optical line terminal 110 (on the uplink side of the optical distribution network) and the (at least one) optical network terminal 140 (on the downlink side of the optical distribution network), there is typically no power supply available that might be easily and reliably be provided (and/or equipped or retrofitted for already existing optical distribution network infrastructure). Especially in a typically used passive optical network infrastructure that provides an underground connection between a first site (the one of the optical line terminal 110; where a power supply is typically available) and a second site (of at least one of the optical network terminals 140 that likewise typically features a power supply) or between the first site and a plurality of such second sites of optical network terminals 140. Such an underground connection is, typically and after its installation, not (or at least not everywhere, e.g. perhaps just at specific locations of manholes) accessible after installation of the optical distribution network.

In Figure 2, a part of the optical distribution network 100 (being connected to a plurality of optical network terminals 141, 142) comprising an optical protection element 130 (or considered optical protection element 130) is schematically shown. Specifically, Figure 2 represents, in greater detail, the part of the optical distribution network - typically (but not necessarily) a splitter entity 121 - that comprises the optical protection element 130 being connected to a plurality of optical network terminals 141, 142 and is represented as comprising the considered optical protection element 130 (at least regarding the connection to (the first) optical network terminal 141).

In order to be able to provide the afore-mentioned protection, the considered optical protection element 130, represented in Figure 2, comprises an optical power detector 131 and a variable optical protector 132. According to the present invention, the variable optical protector 132 (and, hence, also the optical protection element 130) is configured to be switched between at least a first and a second mode of operation: the first mode of operation is a transmission mode of operation that allows the transmission of optical signals (typically both in uplink direction and in downlink direction), at least for optical signals for which the optical distribution network 100 is operatively used, and the second mode of operation being an optical protection mode of operation in which an optical signal - especially an optical signal provided to the variable optical protector 132 from its downlink side (i.e. also from the downlink side of the considered optical protection element 130) - is at least attenuated (and at least partly so, i.e. regarding, if applicable, a specific spectral range), if it is not completely blocked, by the variable optical protector 132. Hence, the variable optical protector 132 might also be called a variable optical attenuator as it is able to at least attenuate an optical signal that is arriving from the downlink side of the optical protection element 130.

According to the present invention, the optical protection element 130 comprises a power extraction and conversion element 136. The power extraction and conversion element 136 is enabled to use or provide - or to extract - electrical power that is provided, to the optical distribution network 100 (and therefore also to the power extraction and conversion element 136 of the respective (i.e. considered) optical protection element 130), by means of an optical power signal (or power optical signal) which is represented by means of reference sign 137.

The power extraction and conversion element 136 of the considered optical protection element 130 extracts the power optical signal 137 and converts the power optical signal 137 to (or into) an electrical supply current. For example and especially, the optical protection element 130 - especially the power extraction and conversion element 136 - comprises at least one photodiode to convert the power optical signal 137 to the electrical supply current.

Furthermore, the optical protection element 130 (especially the power extraction and conversion element 136) comprises an energy storage means 135 (especially of electrical energy) - especially an accumulator, a capacitor, and/or a supercapacitor - such that the energy provided (or received, by the considered optical protection element 130) by the power optical signal 137 does not need to be used immediately upon reception. The energy storage means 135 also provides the possibility that - in order to operate the optical protection element 130, especially in order to switch between its first and second mode of operation, especially regarding the transmission and/or blocking of optical signals from the downlink side of the optical protection element 130, i.e. from connected optical network terminals - a higher instantaneous consumption of electrical power is able to be used or applied compared to the power being able to be provided (rather continuously) by the power optical signal 137. Especially according to the present invention, the power extraction and conversion element 136 is or corresponds to a frequency selective filter, especially an arrayed waveguide grating (AWG) instead of a classical splitter element. Thereby, it is advantageously possible to reduce the corresponding signal loss (i.e. the attenuation of the optical signal that especially needs to be transmitted in downstream direction to other optical network terminals 140) related to the extraction of the power optical signal 137 at the considered optical protection element 130. This is especially due to the fact that by means of using a frequency selective filter instead of a broadband splitter element (to extract the power optical signal 137), only an excess loss has to be considered, and a fundamental loss (principal loss of any non frequency-selective four port splitter device) can be avoided (the excess loss is able to be technologically optimized).

According to the present invention, the (especially electrical) energy stored in the energy storage means 135 is used to power, i.e. to operate, the (components of the) optical protection element 130, and especially the variable optical protector 132, i.e. the energy stored in the energy storage means 135 is especially used to cause to switch the variable optical protector 132 between its (at least) two modes of operation.

Hence the protection of the optical distribution network 100 and of its components is possible, according to the present invention, by means of the optical distribution network 100 comprising at least one optical protection element 130 that is positioned between the optical line terminal 110 and at least one of the optical network terminals 141, 142 (specifically, according to Figure 2, the first optical network terminal 141) and the optical protection element 130 is configured to protect the optical distribution network 100, at least in part, from inappropriate input signals arriving from the downlink side of the optical protection element 130, i.e. especially being fed (or provided, to the optical distribution network 100) - in the example represented in Figure 2 - by the first optical network terminal 141, such inappropriate input signals especially corresponding to optical signals having an optical input power exceeding a threshold value and/or optical signals outside of a predefined optical spectral range.

According to the context of the present invention, in order to operate and to protect the optical distribution network 100 from inappropriate input signals from the first and/or the second optical network terminal 141, 142: The optical power detector 131 (of the considered optical protection element 130) detects - while the optical protection element 130 (or, the variable optical protector 132) being in its first mode of operation - an inappropriate input signal, which causes the optical protection element 130 (i.e. the variable optical protector 132) being switched to its second mode of operation, corresponding to the optical distribution network 100 being protected. In case that the input signal is no longer inappropriate (or there is no optical input power at all being fed, at the downlink side of the considered optical protection element 130, to the optical distribution network 100), i.e. in case that the conditions are fulfilled that the variable optical protector 132 can be safely switched to its first mode of operation, this is able to be realized according to different possibilities or implementations.
According to one such possibility or implementation, in case that the conditions are fulfilled that the variable optical protector 132 can be safely switched to its first mode of operation, this is realized by means of a reset signal received by the optical protection element 130 from its uplink side (or direction) - i.e. in such an implementation, the variable optical protector 132 is configured to be switched to its first mode of operation upon reception, by the optical protection element 130, of the reset signal received from the optical line terminal 110, or at least from the direction of the optical line terminal 110 (typically after the optical line terminal 110 having received a signal or an indication - typically from the optical protection element 130, and there especially from the optical power detector 131 - that an anormal (or, inappropriate) situation no longer applies at the considered optical protection element 130).
However, according to other such possibilities or implementations, in case that the conditions are fulfilled that the variable optical protector 132 can be safely switched to its first mode of operation, this might also be triggered autonomously by the optical protection element 130 itself, especially by means of the optical power detector 131 controlling, or triggering, the variable optical protector 132 to be switched in its first mode of operation (in case that the mentioned conditions are fulfilled).

In Figure 3, a part of the optical distribution network 100, preferably being a passive optical network tree, is schematically shown in greater detail, wherein the represented part of the optical distribution network 100 comprises, besides the optical protection element 130, a further optical protection element 130', wherein for optically supplying electrical power to the optical protection elements 130, 130' different power optical signals are fed, by the optical line terminal 110, into the optical distribution network 100, i.e., typically, into the transport optical fiber of the optical distribution network 100: As described according to Figure 2, the electrical power supply of the optical protection element 130 is based on the optical line terminal 110 providing the power optical signal 137 in downstream direction towards the optical protection element 130, and the power extraction and conversion element 136 of the optical protection element 130 extracts the power optical signal 137 (dashed bold arrow in Figure 3) and converts it to an electrical supply current. Likewise, in order to optically supply electrical power to the further optical protection element 130', a further power optical signal 137' (dotted bold arrow in Figure 3) is fed, by the optical line terminal 110, into the optical distribution network 100, and a further power extraction and conversion element [not explicitly shown in Figure 3] of the further optical protection element 130' extracts the further power optical signal 137' and converts it to an electrical supply current for (or of) the further optical protection element 130'.
Figure 3 represents the optical protection element 130 according to two different alternatively or cumulatively possible locations - a first location of the optical protection element 130 is represented by means of a drawn-through line, and a second location of the optical protection element 130 is represented by means of a dashed line.

It is especially preferred according to the present invention that both the power optical signal 137 and the further power optical signal 137' is adapted to the location, within the optical distribution network 100, of the optical protection element 130 and the further optical protection element 130', respectively. Especially, in case that, e.g., the further optical protection element 130' is farther away from the optical line terminal 110 (in optical terms, i.e. along the transport fiber used by the optical distribution network 100, especially also considering intermediate optical elements, potentially resulting in signal loss or attenuation (damping factor), between the optical line terminal 110 and the further optical protection element 130') than the optical protection element 130, the further power optical signal 137' might comprise a higher power level or might transport more energy per time unit compared to the power optical signal 137; thereby, it might be advantageously possible, according to the present invention, that both the optical protection element 130 and the further optical protection element 130' are provided with a comparatively equal amount of energy using the respective power optical signal.

In case that the topology of the optical distribution network 110 and of its components is such that there are optical protection elements 130 only on one single layer (i.e. in a topological situation where it is excluded (or avoided) that an optical protection element is topologically located, within the optical distribution network 100, 'behind' (from the perspective of the optical line terminal 110), i.e. downstream of, another optical protection element), each optical protection element 130 is directly accessible by the optical line terminal 110, hence the power optical signal 137 (being typically provided by the optical line terminal 110) is able to be directly received by each optical protection element, i.e. by the respective power extraction and conversion element of a considered optical protection element; this corresponds to the situation of the optical protection element 130 at its first location - represented by means of a drawn-through line. Nevertheless, even though the topology of the optical distribution network 110 might only comprise one single layer of optical protection elements 130, different such optical protection elements 130 might be located farther away from the optical line terminal 110 (at least in terms of optical distance of the optical transport fiber of the optical distribution network 100) than other optical protection elements 130, i.e. having an increased damping factor.

However, in case that this condition is not fulfilled, i.e. in case that the topology of the optical distribution network 110 and of its components is such that there are optical protection elements on different layers (i.e. a further optical protection element is topologically located, within the optical distribution network 100, 'behind' (from the perspective of the optical line terminal 110), i.e. downstream, of an optical protection element - corresponding to the situation of the optical protection element 130 at its second location - represented by means of a dashed line), the present invention advantageously provides for the possibility that the further power optical signal 137' is able to be received (not only by the optical protection element(s) on the first topological layer but also) by optical protection elements of further (second, third, etc.) topological layers of the optical distribution network 110.
This is advantageously realized, according to the present invention, by means of the optical protection element 130 (being located on a higher topological layer of the optical distribution network 110) being arranged to provide - even in its second mode of operation - a transmission window between the optical line terminal 110 and further downstream optical elements (and, hence, also towards optical protection elements on topologically lower layers). Such a transmission window is preferably arranged to enable the transmission of the respective power optical signal or power optical signals to downstream devices (especially the optical protection elements on lower layers) behind the optical protection element 130 (from the perspective of the optical line terminal 110).

## Claims

1. Method for optically supplying electrical power to an optical protection element (130) being part of an optical distribution network (100) as part of a telecommunications network, wherein the optical distribution network (100) comprises an optical line terminal (110) and, in downstream direction from the optical line terminal (110), a plurality of optical network terminals (140), wherein the electrical power supply of the optical protection element (130) is based on the optical line terminal (110) providing a power optical signal (137) in downstream direction towards the optical protection element (130), wherein, in order to optically supply electrical power to the optical protection element (130), the method comprises the following steps:
-- in a first step, the power optical signal (137) is fed, by the optical line terminal (110), into the optical distribution network (100),
-- in a second step, a power extraction and conversion element (136) of the optical protection element (130) extracts the power optical signal (137) and converts the power optical signal (137) to an electrical supply current.

2. Method according to claim 1, wherein an optical fiber is used, as part of the optical distribution network (100), to transmit communication signals
-- in downstream direction from the optical line terminal (110) towards other elements of the optical distribution network (100), as well as
-- in upstream direction towards the optical line terminal (110),
wherein the optical fiber is also used to transmit the power optical signal (137), wherein especially the power optical signal (137) is spectrally essentially disjoint from the communication signals.

3. Method according to one of the preceding claims, wherein the power optical signal (137) is adapted to the location, within the optical distribution network (100), of the optical protection element (130), especially the power of the power optical signal corresponding to a damping factor, or accumulated damping factor, of the location of the optical protection element (130) especially due to its distance from the optical line terminal (110),
wherein especially the power extraction and conversion element (136) is configured such as to correspond to the power optical signal (137), especially regarding the spectral location and/or spectral extension of the power optical signal (137),
wherein especially the power extraction and conversion element (136) corresponds to a frequency selective filter.

4. Method according to one of the preceding claims, wherein the optical protection element (130) comprises at least one photodiode to convert the power optical signal (137) to the electrical supply current,
wherein especially, the optical protection element (130) comprises an energy storage means, especially an accumulator (135), a capacitor, a supercapacitor.

5. Method according to one of the preceding claims, wherein, for optically supplying electrical power to a further optical protection element (130') that is likewise part of the optical distribution network (100), the method furthermore comprises the steps of:
-- a further power optical signal (137') is fed, by the optical line terminal (110), into the optical distribution network (100),
-- a further power extraction and conversion element of the further optical protection element (130') extracts the further power optical signal (137') and converts the further power optical signal (137') to an electrical supply current, wherein especially the further power optical signal (137') is adapted to the location, within the optical distribution network (100), of the further optical protection element (130'), especially the power of the further power optical signal (137') corresponding to a damping factor, or accumulated damping factor, of the location of the further optical protection element (130'), especially due to its distance from the optical line terminal (110),
wherein especially the further power extraction and conversion element is configured such as to correspond to the further power optical signal (137'), especially regarding the spectral extension of the further power optical signal (137').

6. Method according to one of the preceding claims, wherein the power optical signal (137) has a center wavelength and a spectral width, wherein the further power optical signal (137') has a further center wavelength and a further spectral width, and wherein the center wavelength and the further center wavelength differ by at least one of the spectral width and the further spectral width, especially
-- by at least one time the spectral width, or
-- by the sum of the halves of both neighboring spectral widths in case the spectral widths of the power optical signal (137) and the further power optical signal (137`) are different.

7. Optical distribution network (100) as part of a telecommunications network for optically supplying electrical power to at least one optical protection element (130) that is part of the optical distribution network (100), wherein the optical distribution network (100) comprises an optical line terminal (110) and, in downstream direction from the optical line terminal (110), a plurality of optical network terminals (140), wherein the electrical power supply of the at least one optical protection element (130) is based on the optical line terminal (110) providing at least one power optical signal (137) in downstream direction towards the optical protection element (130),
wherein, in order to optically supply electrical power to the optical protection element (130), the optical distribution network (100) is configured such that:
-- the at least one power optical signal (137) is fed, by the optical line terminal (110), into the optical distribution network (100),
-- a power extraction and conversion element (136) of the at least one optical protection element (130) extracts the at least one power optical signal (137) and converts the at least one power optical signal (137) to an electrical supply current.

8. Optical distribution network (100) according to claim 6, wherein for optically supplying electrical power to a further optical protection element (130') that is likewise part of the optical distribution network (100), the optical distribution network (100) is configured such that:
-- a further power optical signal (137') is fed, by the optical line terminal (110), into the optical distribution network (100),
-- a further power extraction and conversion element of the further optical protection element (130') extracts the further power optical signal (137') and converts the further power optical signal (137') to an electrical supply current.

9. Optical distribution network (100) according to one of claims 6 or 7, wherein both the power optical signal (137) and the further power optical signal (137') is adapted to the location, within the optical distribution network (100), of the optical protection element (130) and the further optical protection element (130'), wherein especially the power extraction and conversion element and the further power extraction and conversion element is configured such as to correspond to the power optical signal (137) and the further power optical signal (137'), respectively, especially regarding the spectral extension of the power optical signals (137, 137').

10. Optical line terminal (110) as part of an optical distribution network (100) according to one of claims 7 to 9, wherein the optical line terminal (110) is configured to provide a power optical signal (137), via the optical distribution network (100), in downstream direction towards the optical protection element (130),
wherein especially, the optical line terminal (110) is configured to provide a further power optical signal (137'), via the optical distribution network (100), in downstream direction towards a further optical protection element (130'), wherein especially both the power optical signal (137) and the further power optical signal (137') is adapted to the location, within the optical distribution network (100), of the optical protection element (130) and the further optical protection element (130').

11. Optical protection element (130) as part of an optical distribution network (100) according to one of claims 7 to 9.
